# EUROPÄISCHE PATENTSCHRIFT

(11) **EP 2 383 622 B1**
(45) Veröffentlichungstag und Bekanntmachung des Hinweises auf die Patenterteilung: **29.05.2013**
(21) Anmeldenummer: 10004128.4
(22) Anmeldetag: 19.04.2010
(51) Int. Cl.: G05B 19/042

(54) **Anschlussvorrichtung zum Anschluss von Feldgeräten**
Connection device for connecting field devices
Dispositif de raccordement destiné au raccordement d'appareils de terrain

(43) Veröffentlichungstag der Anmeldung: 02.11.2011
(73) Patentinhaber: Siemens Aktiengesellschaft, 80333 München (DE)
(72) Erfinder: Volkmann, Hans, 90559 Burgthann (DE)

(56) Entgegenhaltungen:
- WO-A2-2005/053221
- US-A1- 2001 022 714
- US-A1- 2010 013 325

## Beschreibung

Die Erfindung betrifft eine Anschlussvorrichtung zum Anschluss von Feldgeräten, umfassend einen Busanschluss zum Anschluss an einen Bus und einen Feldgeräteanschluss zum Anschluss für ein Feldgerät.

Derartige Anschlussvorrichtungen und Feldgeräte sind aus WO 2005/053221 A2 bekannt. Zur Ausführbarkeit der Erfindung bezüglich der Anschlussvorrichtung für Feldgeräte im Betrieb eines Netzwerkes, insbesondere eines Profibus PA-Netzwerkes, wird ausdrücklich auf die Schrift WO 2005/053221 A2 verwiesen. Weiterhin ist aus der US 2001/0022714 A1 ein Strombegrenzer für ein Feldbus-Netzwerk bekannt und aus der US 2010/0013325 A1 ist eine Feldgeräte-Schnittstelle mit den Merkmalen des Oberbegriffs des Anspruchs 1 bekannt.

Bei Anschlussvorrichtungen für Feldgeräte, welche über einen Bus, insbesondere einen Feldbus, mit einem übergeordneten Automatisierungsgerät kommunizieren, bildet das Buskabel eine für alle Feldgeräte gemeinsame Komponente, deren Ausfall Auswirkungen auf alle Feldgeräte hat. Darüber hinaus können Fehler in den Feldgeräten, z.B. ein Kurzschluss der Übertragungsleitung oder ein Aussenden von Störsignalen auf die Übertragungsleitung, die Kommunikation der übrigen an den Bus angeschlossene Feldgeräte beeinträchtigen.

Eine Erweiterung eines Feldbusses mit Feldgeräten, beispielsweise eines PA/FF-Busses, soll im laufenden Betrieb möglich sein ohne den Feldbus bzw. seine daran angeschlossenen Teilnehmer zu stören. Während eines Anklemmens von Feldgeräten an die Anschlussvorrichtung kann die Kommunikation aller Geräte bzw. anderer Feldgeräte durch eine Stromänderung am Bus gestört werden.

Es ist daher die Aufgabe der vorliegenden Erfindung, eine Anschlussvorrichtung für Feldgeräte bereitzustellen, welche eine störungsfreie Buserweiterung ermöglicht.

Die Aufgabe wird gelöst, durch die Merkmalskombination des Anspruchs 1 dabei umfasst die Anschlussvorrichtung zum Anschluss von Feldgeräten, einen Busanschluss zum Anschluss an einen Bus, einen Feldgeräteanschluss zum Anschluss für ein Feldgerät, einen Stromversorgungspfad und einen Signalpfad aufweist, wobei der Stromversorgungspfad und der Signalpfad parallel zueinander zwischen dem Busanschluss und dem Feldgeräteanschluss derart angeordnet ist, dass eine auf den Bus geführte Versorgungsspannung von einem ebenfalls auf den Bus geführten Signal durch eine im Stromversorgungspfad angeordnete erste Kopplungseinheit und eine in Signalpfad angeordnete zweite Kopplungseinheit getrennt ist. Eine Trennung bzw. eine Aufteilung von dem Stromversorgungspfad und dem Signalpfad verhindert einen Spannungseinbruch auf dem Bus während eines Anklemmens eines weiteren Feldgerätes an die Anschlussvorrichtung. Der durch das Anklemmen hervorgerufene Spannungseinbruch könnte beispielsweise einen Reset der angeschlossenen anderen Feldgeräte bewirken, welches zu einem Ausfall der jeweiligen Feldgeräte führt oder sogar zu einem Zusammenbruch der gesamten Kommunikation.

Unter den störenden Rückwirkungen ist beispielsweise ein Prellen der Anschlusskontakte mit den anzuschließenden Kontaktadern zu verstehen. Dieses Prellen würde während einer Telegrammübertragung Spannungseinbrüche hervorrufen und die Telegramme stören.

Um ein Störsignal über den Signalpfad zu eliminieren weist die Anschlussvorrichtung ein Messmittel auf, welches zwischen den Kopplungseinheiten und dem Feldgeräteanschluss angeordnet ist, wobei das Messmittel dazu ausgestaltet ist, eine Stromänderung zu detektieren und ein Schaltelement derart zu betätigen, dass ein Stromfluss über den Feldgeräteanschluss unterbrochen ist. Die erwähnte Stromänderung kann beispielsweise folgendermaßen zustande kommen; während einer Inbetriebnahmephase eines Automatisierungssystems mit einem Feldbus, Anschlussvorrichtungen und Feldgeräten oder während eines weiteren Ausbaus des Feldbusses, kann der Fall vorkommen, dass ein Monteur an eine bestehende Anschlussvorrichtung ein Feldgerät über vorgesehene Kontakte an die Anschlussvorrichtung anschließen möchte. Dadurch, dass das Anschließen eine manuelle Tätigkeit und nicht ein sauberer exakter Schaltvorgang ist, ist es möglich, die Leitung mit ihren Adern, wobei die Leitung an das Feldgerät angeschlossen ist und das Feldgerät wiederum an Kontakte der Anschlussvorrichtung angeklemmt werden soll, aufgrund des mechanischen Heranführens kurzzeitig Kontakt haben und wieder keinen Kontakt und somit Störungen entstehen können. Bei der hier vorliegenden Anschlussvorrichtung ist es aber gerade von Vorteil, dass ein erstes Berühren mit den Adern der Leitung an den Kontakten erkannt wird, weil ein erster - zwar kurzzeitiger - Strom fließt. Dieser Stromwert wird durch das Messmittel erkannt, wobei das Messmittel wiederum diese erkannte Stromänderung einem Schaltelement mitteilt, welches den Stromfluss über den Feldgeräteanschluss sofort unterbricht und sich dadurch die Störungen nicht mehr rückwirkend auf dem Bus bemerkbar machen können.

Dabei ist ein Überwachungsmittel vorgesehen, welches dazu ausgestaltet ist, ein Telegrammverkehr auf dem Bus zu überwachen, wobei das Überwachungsmittel mit einer Steuereinheit in Verbindung steht und die Steuereinheit dazu ausgestaltet ist, das Zuschalten des Feldgerätes nur in einer Telegrammpause zuzulassen. Dadurch ist sichergestellt, dass eine eventuell auftretende Störung nur in einer Zeitspanne einer Telegrammpause, also wenn kein Telegramm auf den Bus unterwegs ist, durchgeführt wird.

In einer weiter optimierten Ausgestaltung der Anschlussvorrichtung ist eine Verzögerungsschaltung vorgesehen, welche nach einer erkannten Stromänderung durch das Messmittel das Schaltelement derart steuert, dass dieses für eine vorbestimmte Zeitdauer geöffnet bleibt. Die vorbestimmte Zeitdauer ist zunächst frei wählbar. Diese wählbare Zeitdauer richtet sich vorzugsweise nach einer Dauer für einen Anschlussvorgang, welche von einem Inbetriebsetzer, der das Feldgerät anklemmen will, benötigt wird. Beispielsweise könnte die Zeitdauer auf 5 s eingestellt sein, denn nach einem erstmaligen Kontakt, welcher zu einer Stromänderung bzw. zu einer Stromspitze führt, kann nach Ablauf der 5 s mit ausreichender Wahrscheinlichkeit gesagt werden, dass nun die Adern der Leitung zu dem Feldgerät an den Kontakten der Anschlussvorrichtung sicher montiert sind und somit keine störenden Stromänderung mehr entstehen.

Um weiterhin die durch einen Anschlussvorgang hervorgerufenen Störungen und Rückwirkungen auf den Bus zu minimieren, weist in einer weiteren Ausgestaltung die Anschlussvorrichtung im Stromversorgungspfad eine Stromanstiegsbegrenzungsschaltung auf. Diese Stromanstiegsbegrenzungsschaltung stellt dabei auch eine Art Entkopplung dar, indem die Stromanstiegsbegrenzungsschaltung nur eine langsame Stromänderung zulässt, können sich die schnellen störenden Stromänderungen nicht auf dem Bus bemerkbar machen.

In einer weiteren Ausgestaltung ist im Stromversorgungspfad ein Energiespeicher angeordnet. Dieser Energiespeicher könnte in Form eines Speicherkondensators ausgestaltet sein. Ein durch den Anschluss eines Feldgerätes hervorgerufener plötzlich benötigter Energiebedarf kann somit aus dem Energiespeicher bereitgestellt werden.

Weiterhin ist es von Vorteil, wenn die erste Kopplungseinheit einen Tiefpass, insbesondere eine Spule oder eine elektronische Schaltung, beispielsweise ein Impedanzwandler, aufweist.

Im Ex-Bereich wird oft eine galvanische Trennung gefordert. Dies kann erreicht werden, indem in der ersten Kopplungseinheit ein DC/DC-Wandler und in der zweiten Kopplungseinheit, vorzugsweise eine optische Schnittstelle, eingesetzt wird.

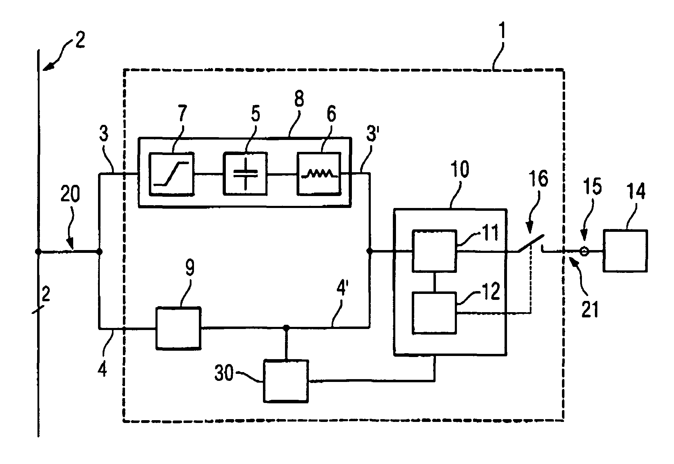

Ein Ausgestaltungsbeispiel wird anhand der Zeichnung näher erläutert.

Gemäß der Figur ist eine Anschlussvorrichtung 1 für Feldgeräte 14 dargestellt. Die Anschlussvorrichtung 1 weist einen Busanschluss 20 auf, welcher mit einem Bus 2 in Verbindung steht. Der Bus 2 ist als ein Zweidraht-Profibus PA ausgestaltet. Um Feldgeräte 14 anzuschließen weist die Anschlussvorrichtung 1 weiterhin einen Feldgeräteanschluss 21 auf. Damit die Feldgeräte 14 über entsprechende Leitungen mit ihren Adern an die Anschlussvorrichtung 1 angeklemmt werden können, weist die Anschlussvorrichtung 1 weiterhin Kontakte 15 auf.

Zwischen dem Busanschluss 20 und dem Feldgeräteanschluss 21 ist zur Übertragung von einer Versorgungsspannung, welcher neben einem Datensignal durch den Bus 2 bereitgestellt wird, ein Stromversorgungspfad 3, 3' und für das Datensignal ein Signalpfad 4, 4' angeordnet. Der Stromversorgungspfad 3, 3' und der Signalpfad 4, 4' sind dabei parallel zueinander zwischen dem Busanschluss 20 und dem Feldgeräteanschluss 21 angeordnet. Durch diese Anordnung kann die auf dem Bus 2 gemeinsam vorliegende Versorgungsspannung und das Datensignal voneinander getrennt werden. Diese Trennung wird durch eine erste Kopplungseinheit 8, angeordnet im Stromversorgungspfad 3, 3', und durch eine zweite Kopplungseinheit 9, angeordnet im Signalpfad 4, 4', realisiert.

Von links nach rechts betrachtet, also ausgehend von dem Bus 2, kann ein auf dem Bus geführtes Signal über den Busanschluss 20 und dem Signalpfad 4 an die zweite Kopplungseinheit 9 gelangen, wodurch das Signal von der, auf dem Bus geführten Versorgungsspannung, entkoppelt. Analog dazu wird durch die erste Kopplungseinheit 8 im Stromversorgungspfad 3, 3' die Versorgungsspannung von dem Signal getrennt. In Richtung des Feldgeräteanschlusses 21 gesehen wird nach der ersten Kopplungseinheit 8 und nach der zweiten Kopplungseinheit 9 die Versorgungsspannung und das Signal wieder zusammengeführt.

An diese Zusammenführung ist eine Steuereinheit 10 angeschlossen. Die Steuereinheit 10 weist ein Messmittel 11 und eine Verzögerungsschaltung 12 auf. Die Steuereinheit 10 und ein Schaltelement 16 sind in einer Reihenschaltung angeordnet und ermöglichen bei geschlossenem Schaltelement 16 ein Versorgungsstromfluss und ein Signalstromfluss zu dem über die Kontakte 15 angeschlossenem Feldgerät 14.

Im Folgenden wird der Vorgang eines Anschlusses des Feldgerätes 14 an die Anschlussvorrichtung 1 über die Kontakte 15 beschrieben. Entgegen der in der Figur fest eingezeichneten elektrischen Verbindung muss man sich für den Anschlussvorgang zunächst eine gelöste Verbindung vorstellen. Bei einem erstmaligen Anschluss einer Anschlussleitung des Feldgerätes 14 an die Kontakte 15 berühren die Adern zunächst erstmalig die Kontakte 15, wodurch ein Stromfluss hervorgerufen wird. Dieser Stromfluss beschreibt einen Weg von dem Bus 2, über den Busanschluss 20, über den Stromversorgungspfad 3, über die erste Kopplungseinheit 8, in die Steuereinheit 10, über das Schaltelement 16, über die Kontakte 15 und letztendlich an das Feldgerät 14. Dabei ist in der Steuereinheit 10 ein Messmittel 11 angeordnet, welches dazu ausgestaltet ist, diesen Stromfluss bzw. die Stromänderung zu detektieren und das Schaltelement 16 derart zu betätigen, dass zunächst ein Stromfluss über den Feldgeräteanschluss 21 unterbrochen wird.

Die innerhalb der Steuereinheit 10 angeordnete Verzögerungsschaltung 12 ist derart konfiguriert, dass nach einer erkannten Stromänderung durch das Messmittel 11, das Schaltelement 16 derart gesteuert wird, dass dieses für beispielsweise 5 s geöffnet bleibt.

Der Monteur, welcher das Feldgerät an die Anschlussvorrichtung 1 anschließt, hat nun also 5 s Zeit, die Adern ordnungsgemäß anzuklemmen, ohne dass weitere Störungen hervorgerufen werden. Nach Ablauf der vorbestimmten Zeitdauer wird das Schaltelement 16 erneut geschlossen und über das Messmittel 11 wird ein Stromwert ermittelt. Ist der jetzt fließende Strom nun konstant, wird der Feldgeräteanschluss 21 über das Schaltelement 16 dauerhaft zugeschaltet. Falls in dem ermittelten Strommesswert immer noch Schwankungen zu erkennen sind, wird der Abschaltvorgang und der darauffolgende Zuschaltvorgang wiederholt.

Optional kann weiterhin die Anschlussvorrichtung 1 ein Überwachungsmittel 30 aufweisen, wobei das Überwachungsmittel 30 mit einem ersten Anschluss mit dem Bus 2 in Verbindung steht und mit einem zweiten Anschluss mit der Steuereinheit 10 in Verbindung steht. Das Überwachungsmittel 30 ist dazu ausgestaltet einen Telegrammverkehr zu überwachen und in telegrammfreien Zeiten bzw. in Telegrammpausen der Steuereinheit 10 ein Freigabesignal zu übermitteln, dass dieses das Zuschalten, also das Schließen des Schaltelementes 16, zulässt.

## Patentansprüche

1. Anschlussvorrichtung (1) zum Anschluss von Feldgeräten (14), umfassend
- einen Busanschluss (20) zum Anschluss an einen Bus (2),
- einen Feldgeräteanschluss (21) zum Anschluss für ein Feldgerät (14),
- einen Stromversorgungspfad (3,3') und
- einen Signalpfad (4,4'),
wobei der Stromversorgungspfad (3, 3') und der Signalpfad (4,4') parallel zu einander zwischen dem Busanschluss (20) und dem Feldgeräteanschluss (21) derart angeordnet ist, dass eine auf dem Bus (2) geführte Versorgungsspannung von einem ebenfalls auf dem Bus (2) geführten Signal durch
- eine im Stromversorgungspfad (3, 3') angeordnete erste Kopplungseinheit (8) und
- eine im Signalpfad (4, 4') angeordnete zweite Kopplungseinheit (9)
getrennt ist, **dadurch gekennzeichnet, dass** ein Messmittel (11) zwischen den Kopplungseinheiten (8,9) und dem Feldgeräteanschluss (21) angeordnet ist, wobei das Messmittel (11) dazu ausgestaltet ist eine Stromänderung, die in dem Stromversorgungspfad (3) zum Feldgerät (14) auftritt, zu detektieren und ein Schaltelement (16) derart zu betätigen, dass ein Stromfluss über den Feldgeräteanschluss (21) unterbrochen ist, weiterhin aufweisend ein Überwachungsmittel (30), welches dazu ausgestaltet ist einen Telegrammverkehr auf dem Bus (2) zu überwachen, wobei das Überwachungsmittel (30) mit einer Steuereinheit (10) in Verbindung steht und die Steuereinheit (10) dazu ausgestaltet ist das Zuschalten des Feldgerätes (14) nur in einer Telegrammpause zu zulassen.

2. Anschlussvorrichtung (1) nach Anspruch 1, wobei eine Verzögerungsschaltung(12) vorhanden ist, welche nach einer erkannten Stromänderung das Schaltelement (16) derart steuert, dass dieses für eine vorbestimmte Zeitdauer geöffnet bleibt.

3. Anschlussvorrichtung (1) nach einem der Ansprüche 1 oder 2, wobei der Stromversorgungspfad (3,3') weiterhin eine Stromanstiegsbegrenzungsschaltung (6) aufweist.

4. Anschlussvorrichtung (1) nach einem der Ansprüche 1 bis 3, wobei im Stromversorgungspfad (3,3') ein Energiespeicher (5) angeordnet ist.

5. Anschlussvorrichtung (1) nach einem der Ansprüche 1 bis 4, wobei die erste Kopplungseinheit (8) einen Tiefpass oder eine elektronische Schaltung, insbesondere einen Impedanzwandler aufweist.

6. Anschlussvorrichtung (1) nach einem der Ansprüche 1 bis 5, wobei die zweite Kopplungseinheit (9) eine galvanische Trennung, insbesondere eine optische Schnittstelle aufweist.

## Claims

1. Connecting apparatus (1) for connection of field devices (14), comprising
- a bus connection (20) for connection to a bus (2),
- a field device connection (21) for connection for a field device (14),
- a power supply path (3, 3') and
- a signal path (4, 4'),
wherein the power supply path (3, 3') and the signal path (4, 4') are arranged in parallel with one another between the bus connection (20) and the field device connection (21) such that a supply voltage which is carried on the bus (2) is isolated from a signal, which is likewise carried on the bus (2), by
- a first coupling unit (8) which is arranged in the power supply path (3, 3'), and
- a second coupling unit (9) which is arranged in the signal path (4, 4'), **characterized in that** a measurement means (11) is arranged between the coupling units (8, 9) and the field device connection (21), wherein the measurement means (11) is designed to detect a current change which occurs in the power supply path (3) to the field device (14) and to operate a switching element (16) such that a current flow via the field device connection (21) is interrupted, furthermore having a monitoring means (30), which is designed to monitor telegram traffic on the bus (2), wherein the monitoring means (30) is connected to a control unit (10), and the control unit (10) is designed to allow the field device (14) to be connected only in a telegram pause.

2. Connecting apparatus (1) according to Claim 1, wherein a delay circuit (12) is provided, which controls the switching element (16) after an identified current change such that this switching element (16) remains open for a predetermined time period.

3. Connecting apparatus (1) according to either of Claims 1 and 2, wherein the power supply path (3, 3') furthermore has a current rise limiting circuit (6).

4. Connecting apparatus (1) according to one of Claims 1 to 3, wherein an energy store (5) is arranged in the power supply path (3, 3').

5. Connecting apparatus (1) according to one of Claims 1 to 4, wherein the first coupling unit (8) has a low-pass filter or an electronic circuit, in particular an impedance converter.

6. Connecting apparatus (1) according to one of Claims 1 to 5, wherein the second coupling unit (9) has galvanic isolation, in particular an optical interface.

## Revendications

1. Dispositif ( 1 ) de raccordement pour le raccordement d'appareils ( 14 ) de terrain, comprenant
- une connexion ( 20 ) de bus pour le raccordement à un bus ( 2 ),
- une connexion ( 21 ) d'appareils de terrain pour le raccordement d'un appareil ( 14 ) de terrain,
- un trajet ( 3, 3' ) d'alimentation en courant électrique et
- un trajet ( 4, 4' ) de signal,
dans lequel le trajet ( 3, 3' ) d'alimentation en courant et le trajet ( 4, 4' ) de signal sont disposés parallèlement l'un à l'autre entre la connexion ( 20 ) de bus et la connexion ( 21 ) d'appareils de terrain, de manière à séparer une tension d'alimentation appliquée au bus ( 2 ) d'un signal conduit également sur le bus ( 2 ) par
- une première unité ( 8 ) de couplage disposée sur le trajet ( 3, 3' ) d'alimentation en courant et
- une deuxième unité ( 9 ) de couplage disposée dans le trajet ( 4, 4' ) de signal
**caractérisé en ce qu'**un moyen ( 11 ) de mesure est disposé entre les unités ( 8, 9 ) de couplage et la connexion ( 21 ) d'appareils de terrain, le moyen ( 11 ) de mesure étant conformé pour détecter une variation de courant, qui se produit dans le trajet ( 13 ) d'alimentation en courant en direction de l'appareil ( 14 ) de terrain et pour actionner un élément ( 16 ) de commutation, de manière à interrompre un flux de courant par la connexion ( 21 ) d'appareil de champ et ayant, en outre, un moyen ( 30 ) de contrôle, qui est conformé pour contrôler une circulation de télégrammes sur le bus ( 2 ), le moyen ( 30 ) de contrôle étant en liaison avec une unité ( 10 ) de commande et l'unité ( 10 ) de commande étant conformée pour n'autoriser le branchement de l'appareil ( 14 ) de terrain que dans un intervalle entre des télégrammes.

2. Dispositif ( 1 ) de raccordement suivant la revendication 1, dans lequel il y a un circuit ( 12 ) de temporisation, qui commande l'élément ( 16 ) de commutation après qu'une variation de courant a été détectée, de manière à ce qu'il reste ouvert pendant une durée déterminée à l'avance.

3. Dispositif ( 1 ) de raccordement suivant l'une des revendications 1 ou 2, dans lequel le trajet ( 3, 3' ) d'alimentation en courant a, en outre, un circuit ( 6 ) de limitation de l'augmentation du courant.

4. Dispositif ( 1 ) de raccordement suivant l'une des revendications 1 à 3, dans lequel un accumulateur ( 5 ) d'énergie est disposé dans le trajet ( 3, 3' ) d'alimentation en courant.

5. Dispositif ( 1 ) de raccordement suivant l'une des revendications 1 à 4, dans lequel la première unité ( 8 ) de couplage comporte un passe-bas ou un circuit électronique, notamment un convertisseur d'impédance.

6. Dispositif ( 1 ) de raccordement suivant l'une des revendications 1 à 5, dans lequel la deuxième unité ( 9 ) de couplage comporte une séparation galvanique, notamment une interface optique.
